# DEMANDE DE BREVET EUROPEEN

(11) **EP 1 980 772 A1**
(43) Date de publication de la demande: **15.10.2008**
(21) Numéro de dépôt: 08305096.3
(22) Date de dépôt: 10.04.2008
(51) Int. Cl.: F16H 63/18

(54) **Grille de commande de vitesses pour véhicule et boîte de vitesses équipée d'une telle grille**

(30) Priorité: 12.04.2007 FR 0754433
(71) Demandeur: PEUGEOT CITROËN AUTOMOBILES S.A., 78140 Vélizy Villacoublay (FR)
(72) Inventeur: Mitchell, Clément, 92250 La Garenne Colombes (FR)

(57) **Abrégé**

La présente invention concerne une grille de commande de vitesses pour véhicule et une boîte de vitesses équipée d'une telle grille.

Selon l'invention, la grille (8) a des chicanes de pistes de guidage (9,10,13,14) qui sont agencées suivant des positions décalées angulairement autour de l'axe de rotation du barillet (8) les unes par rapport aux autres à la périphérie de ce barillet de manière à actionner des fourchettes (F1 - F4) pour assurer d'une part un changement de rapport dans un sens montant ou descendant de déplacement de la grille (8) suivant un ordre d'actionnement déterminé des fourchettes et d'autre part un changement inverse du rapport dans le sens de déplacement de la grille (8) suivant un ordre d'actionnement déterminé des fourchettes différent de l' ordre d'actionnement inverse à celui se produisant lors de changement de rapport dans l'autre sens montant ou descendant de déplacement de la grille (8).

L'invention trouve application dans le domaine de l'automobile.

## Description

La présente invention concerne une grille de commande de vitesses pour véhicule, tel qu'un véhicule automobile, logée dans une boîte de vitesses du véhicule à arbres parallèles et à engrenages.

L'invention concerne plus particulièrement une grille de commande de vitesses formée d'un barillet de commande cylindrique, mobile en rotation.

Dans sa forme conventionnelle, un barillet de boîte de vitesses pour véhicule automobile comporte au moins deux pistes ou gorges circulaires de guidage des doigts de commande des fourchettes d'engagement des différents rapports.

Pour effectuer un changement de rapport, le barillet est commandé en rotation autour de son axe longitudinal de révolution par au moins un actionneur de manière à provoquer un mouvement de translation de la fourchette concernée au moyen de son doigt qui est contraint de suivre la piste qui lui est associée.

En règle générale, l'utilisation d'un barillet dans une boîte de vitesses implique que la montée ou la descente des rapports soit réalisée rapport par rapport. Par exemple, le conducteur du véhicule qui souhaite engager le rapport de quatrième vitesse alors que la boîte de vitesses se trouve dans le rapport de sixième vitesse, est contraint d'engager le rapport de cinquième vitesse avant de pouvoir engager la quatrième vitesse et inversement pour le passage de la quatrième vitesse à la sixième vitesse. Dans ce cas, la boîte de vitesses est dite séquentielle du fait que le barillet effectue toujours la même séquence ou rotation pour n'importe quel changement de rapport. En effet, à une séquence ou rotation d'un certain angle fixe du barillet correspond une translation de l'une des fourchettes liées au barillet.

Dans le cas où, pour un même changement de rapport, deux fourchettes, dites première et seconde fourchettes, doivent être actionnées consécutivement par le barillet qui provoque un mouvement de translation de la première fourchette puis un mouvement de translation de la seconde fourchette, le problème posé par l'utilisation d'un barillet classique est l'absence de réversibilité en fonction du sens de rotation de ce barillet.

En effet, en considérant le cas où le barillet comporte deux pistes de guidage dans lesquelles sont logés deux doigts de commande de deux fourchettes indépendantes, si dans le sens horaire de rotation du barillet la première fourchette est actionnée avant la seconde fourchette, alors dans le sens inverse trigonométrique, c'est la seconde fourchette qui sera actionnée avant la première fourchette. Ce phénomène est dû à la géométrie des pistes de guidage ainsi qu'à leur position angulaire relative à la périphérie du barillet.

La présente invention a pour but d'éliminer l'inconvénient ci-dessus des barillets de commande de vitesses pour véhicules automobiles.

A cet effet, selon l'invention, la grille de commande de vitesses pour véhicule, tel qu'un véhicule automobile, comprenant au moins deux pistes de guidage dans lesquelles sont logés respectivement deux doigts de commande solidaires respectivement de deux fourchettes et qui présentent des chicanes permettant de dévier axialement chaque doigt de façon à déclencher le crabotage d'un rapport suivant le rapport courant en montée ou en descente des rapports selon le sens de déplacement imparti à la grille, est caractérisée en ce que chaque piste de guidage comprend au moins une chicane permettant de dévier axialement le doigt associé d'une fourchette dans le sens montant de déplacement de la grille et au moins une chicane permettant de dévier axialement le doigt de la fourchette dans le sens descendant de déplacement de la grille et en ce que les chicanes des pistes sont agencées suivant des positions décalées les unes par rapport aux autres relativement au sens de déplacement de la grille de manière à actionner les fourchettes pour assurer d'une part un changement de rapport dans un sens montant ou descendant de rotation du barillet suivant un ordre d'actionnement déterminé des fourchettes et d'autre part un changement inverse du rapport dans le sens de déplacement opposé de la grille suivant un ordre d'actionnement déterminé des fourchettes différent de l'ordre d'actionnement des fourchettes inverse à celui se produisant lors du changement de rapport dans l'autre sens montant ou descendant de déplacement de la grille.

Avantageusement, la grille de commande comprend quatre pistes de guidage de réception de quatre doigts de commande respectivement de quatre fourchettes indépendantes pouvant être actionnées pour un changement de rapport dans le sens montant ou descendant de déplacement de la grille suivant un ordre différent de l'ordre d'actionnement des fourchettes lors du changement inverse du rapport dans le sens de déplacement opposé de la grille.

De préférence, chaque doigt d'une fourchette est maintenu radialement et élastiquement au fond de la piste correspondante dont l'une des chicanes dévie axialement le doigt de la fourchette d'une première voie de la piste de guidage à une seconde voie parallèle de guidage de cette piste dans le sens montant ou descendant de déplacement de la grille et l'autre chicane opposée dévie axialement le doigt de la fourchette de la seconde voie à la première voie de la piste de guidage dans le sens opposé de déplacement de la grille.

La voie d'une piste de guidage prolongeant une chicane et débouchant à l'entrée d'un doigt de l'autre chicane en considérant le sens montant ou descendant de déplacement de la grille a son fond surplombant l'entrée de cette autre chicane pour constituer un épaulement permettant de dévier axialement le doigt.

Les fourchettes sont déviées axialement dans le même sens par les pistes de la grille lorsque cette dernière est entraînée en déplacement dans le sens montant ou dans le sens descendant d'un changement de rapport.

Selon une variante de réalisation, deux fourchettes sont déviées axialement dans deux sens opposés par les pistes de la grille lorsque cette dernière est entraînée en déplacement dans le sens montant ou dans le sens descendant d'un changement de rapport.

Chaque doigt d'une fourchette est en partie logé dans le corps de la fourchette et est rappelé au fond de la piste correspondante par un organe de compression monté entre ledit doigt et ledit corps.

Avantageusement, ledit organe de compression est un ressort hélicoïdal de compression concentrique au doigt et précontraint entre ledit doigt et le corps de la fourchette.

La grille est formée d'un barillet cylindrique de commande, mobile en rotation autour d'un axe, comprenant au moins deux pistes de guidage circulaires et en ce que les chicanes des pistes sont agencées suivant des positions décalées angulairement autour de l'axe de rotation du barillet les unes par rapport aux autres à la périphérie dudit barillet.

Selon une variante de réalisation, la grille est formée d'une grille plane mobile en translation selon une direction perpendiculaire à l'axe de déplacement axial des fourchettes.

L'invention vise également une boîte de vitesses pour véhicule comprenant une grille de commande telle que définie précédemment, la boîte de vitesses comprenant un actionneur de commande de déplacement de la grille et piloté soit par un dispositif purement mécanique soit par une électronique de commande, en réponse à l'actionnement par le conducteur du véhicule d'un levier de changement des rapports de la boîte de vitesses.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant deux modes de réalisation de l'invention et dans lesquels :
- la figure 1 est une vue en perspective d'un barillet conforme à l'invention permettant de commander le déplacement de deux fourchettes de changement d'un rapport dans une boîte de vitesse d'un véhicule automobile ;
- la figure 2 est une vue partielle en perspective suivant la flèche II de la figure 1, le barillet étant dans une position angulaire distincte de celle de la figure 1 ;
- la figure 3 est une vue partielle en perspective suivant la flèche III de la figure 2, le barillet étant dans une position angulaire distincte de celles des figures 1 et 2 ;
- la figure 4 est une vue en section suivant la ligne IV-IV de la figure 1 ;
- les figures 5A à 5C sont des vues développées de la section suivant la ligne IV-IV de la figure 3 et montrant le profil du fond d'une partie de la piste de guidage du barillet coopérant avec un doigt de fourchette suivant un sens de rotation déterminé du barillet ;
- les figures 6A et 6B sont des vues semblables à celles des figures 5A à 5C et représentant la rotation du barillet dans le sens opposé ;
- la figure 7 est une vue agrandie de la partie cerclée VII de la figure 4 ; et
- la figure 8 est une vue développée de quatre pistes agencées à la périphérie du barillet de commande de la figure 1 associées respectivement à quatre fourchettes de changement de rapports et correspondant au mode de réalisation préféré de l'invention ; et
- la figure 9 est une vue développée des pistes du barillet de commande suivant une variante de réalisation.

L'invention qui va être décrite peut s'appliquer de manière non limitative à une boîte de vitesses robotisée à changement de vitesses sous couple telle que décrite dans la demande de brevet internationale WO 2004/099654.

Sans rentrer dans les détails, selon cette boîte de vitesses connue, chaque roue dentée est solidarisable en rotation par rapport à l'arbre qui la porte par deux demi-crabots. Chaque demi-crabot, lorsqu'il est engagé seul dans une roue dentée, la bloque en rotation par rapport à l'arbre qui la porte, uniquement dans un sens de rotation, en définissant avec celle-ci une liaison de type roue libre. Les deux demi-crabots d'une même paire sont aptes à bloquer une roue dentée dans deux sens de rotation opposés par rapport à l'arbre qui porte cette roue. Ainsi, l'engagement d'un rapport d'ordre supérieur dans un sens montant, c'est-à-dire partant du rapport courant, est réalisé en déplaçant d'abord un demi-crabot montant pour l'engager dans la roue dentée, puis le demi-crabot descendant pour l'engager dans la roue dentée. Chaque demi-crabot est déplacé par une fourchette correspondante et il est mobile entre une position d'engagement dans une roue dentée, une position neutre et une position d'engagement dans une autre roue dentée.

L'idée à la base de l'invention est de concevoir un organe de commande pour boîte de vitesses comprenant une grille de commande de vitesses, ladite grille étant mobile et capable de déplacer toutes les fourchettes de la boîte de vitesses lorsqu'elle est déplacée sur une amplitude maximale. La grille est un corps de l'organe de commande comprenant des gorges de guidage.

L'invention peut être mise en oeuvre sous forme d'un organe de commande dans lequel la grille est plane et mobile en translation selon une direction perpendiculaire à la direction de déplacement axial des fourchettes. Elle peut également être mise en oeuvre, comme dans la description qui suit, sous forme d'un organe de commande comprenant un corps de barillet rotatif pourvu de gorges et formant ladite grille ; le barillet étant rotatif selon un axe parallèle à la direction de déplacement axial des fourchettes.

Dans les figures illustrant l'invention, les séquences de déplacement des fourchettes sont obtenues avec un barillet de commande rotatif comprenant des pistes de guidage circulaires ou gorges recevant chacune un doigt d'une fourchette.

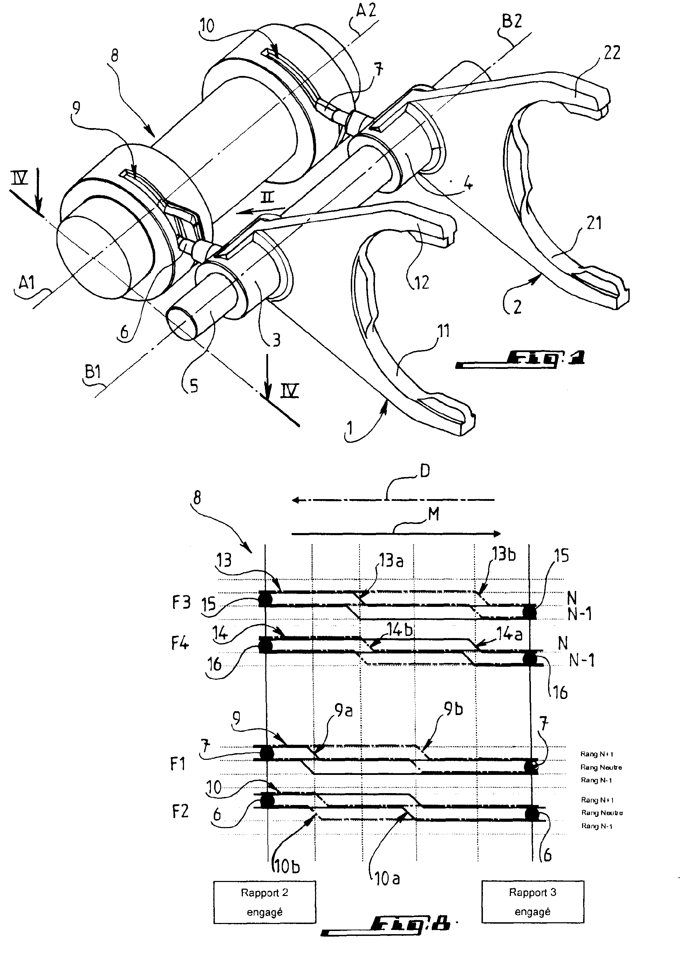

La figure 1 représente une partie des moyens de commande d'une boîte de vitesses pour véhicule automobile.

Ces moyens de commande comprennent, à titre d'exemple, au moins deux fourchettes 1, 2 ayant chacun de leurs corps 3, 4 monté coulissant le long d'un axe cylindrique fixe 5. Chaque fourchette 1, 2 comporte deux branches 11, 12 ; 21, 22 portées par les corps respectifs 3, 4 et liées à un demi-crabot correspondant, non représenté, dans l'application à une boîte de vitesses connue ci-dessus décrite brièvement. Le corps 3, 4 de chaque fourchette 1, 2 comporte, à l'opposé des branches 11, 12 ; 21, 22 de chaque fourchette, un doigt 6, 7.

Les moyens de commande de la boîte de vitesses comprennent en outre un barillet cylindrique de commande 8 dont l'axe de rotation A1, A2 est parallèle à l'axe B1, B2 de l'axe cylindrique 5.

Le barillet 8 comprend plusieurs pistes ou gorges de guidage généralement circulaires ou courbes 9, 10 dans lesquelles sont logés radialement respectivement les doigts 6, 7 des fourchettes 1, 2. Il y a autant de pistes de guidage 9, 10 qu'il y a de doigts 6,7 de fourchettes 1, 2, reçus radialement dans leurs pistes de guidage respectives. Ainsi, comme représenté en figure 1, le barillet 8 comporte deux pistes de guidage 9, 10 associées respectivement à deux doigts de fourchettes 6, 7, mais il est bien entendu que le barillet peut comporter un plus grand nombre de pistes de guidage associées respectivement à des doigts de fourchettes comme on le verra ultérieurement.

La rotation commandée du barillet 8 autour de son axe A1, A2 en réponse à l'actionnement par le conducteur du véhicule d'un levier de changement des rapports de la boîte de vitesses ou sur ordre d'un calculateur, permet de guider sélectivement les doigts 6, 7 dans des chicanes des pistes périphériques 9, 10 du barillet 8 pour provoquer des mouvements axiaux des doigts 6, 7 et le crabotage des demi-crabots par les fourchettes associées aux doigts 6, 7.

Selon l'invention, comme cela ressort mieux de la figure 8, qui représente une vue développée suivant un plan de la surface cylindrique du barillet 8 comportant quatre pistes 9, 10, 13, 14 de réception respectivement de quatre doigts radiaux 6, 7, 15, 16 solidaires respectivement de quatre fourchettes F1, F2, F3, F4, chaque piste de guidage comprend une première chicane 9a, 10a, 13a, 14a représentée en trait fort et permettant de dévier axialement le doigt associé 6, 7, 15, 16 dans le sens montant de rotation du barillet 8, symbolisé en trait fort par la flèche M, d'une première voie à une seconde voie parallèle de la piste de guidage pour un changement de rapport. Chaque piste de guidage 9, 10, 13, 14 comprend une seconde chicane 9b, 10b, 13b, 14b représentée en trait mixte et permettant de dévier axialement le doigt associé 6, 7, 15, 16 de la seconde voie à la première voie parallèle de la piste de guidage lorsque le barillet 8 est tourné dans le sens descendant de changement inverse du rapport comme indiqué par la flèche en trait mixte D.

La figure 8 montre que le déplacement axial par les chicanes 9a, 10a, 13a, 14a des doigts de fourchettes 6, 7, 15, 16 s'effectue dans le même sens axial dans le sens de rotation montant M du barillet 8 tandis que ces doigts sont déplacés axialement dans le même sens opposé par les chicanes respectives 9b, 10b, 13b, 14b, dans le sens de rotation descendant D de ce barillet 8.

Dans le mode de réalisation représenté en figure 8, les rapports sont montés de façon croissante (ou éventuellement décroissante) sur les arbres portant les roues dentées correspondante, de sorte que les fourchettes 1, 2 sont déviées axialement dans le même sens par les pistes du barillet 8 lorsque ce dernier est entraîné en rotation dans le sens montant M ou descendant D d'un changement de rapport.

Dans le cas non représenté où les rapports sont montés alternés, les fourchettes 1, 2 sont déviées axialement dans un sens opposé à celui des fourchettes 3, 4 par les pistes du barillet 8 lorsque ce dernier est entraîné en rotation dans le sens montant M ou descendant D d'un changement de rapport. Par exemple, dans le cas où les rapports sont montés sur l'arbre de la façon suivante, 1-3-2-5-4-6, lors d'un passage de 1 vers 2, les fourchettes F1, F2 servant à désengager le rapport de première sont effectivement déviées axialement dans un sens opposé à celui des fourchettes F3, F4 servant à engager le rapport de deuxième.

En outre, les première et seconde chicanes 9a, 10a, 13a, 14a, et 9b, 10b, 13b, 14b sont agencées suivant des positions décalées angulairement autour de l'axe de rotation A1, A2 du barillet 8 les unes par rapport aux autres à la périphérie de ce barillet de manière à actionner les fourchettes F1 à F4 pour assurer d'une part un changement de rapport dans un sens montant ou descendant de rotation du barillet 8 suivant un ordre d'actionnement déterminé des fourchettes et d'autre part un changement inverse de ce rapport dans le sens de rotation opposé du barillet 8 suivant un ordre d'actionnement déterminé des fourchettes et différent de l'ordre d'actionnement des fourchettes inverse à celui se produisant lors du changement de rapport dans l'autre sens montant ou descendant de rotation du barillet 8.

La figure 8 illustre la situation où les quatre fourchettes F1 à F4 doivent être actionnées pour réaliser un changement de rapport déterminé.

Dans la situation de départ représentée à gauche de la figure 8, le deuxième rapport de marche avant est engagé et correspond à une configuration selon laquelle les doigts 6, 7 des fourchettes F1, F2 se trouvent dans une voie de la piste de guidage 9, 10 d'un rang N+1 supérieur au rang neutre N de l'autre voie parallèle de cette piste alors que les doigts 15, 16 des fourchettes F3, F4 sont logés dans la voie de la piste de guidage 13, 14 de rang neutre N.

Pour engager le troisième rapport de marche avant, le barillet 8 est piloté de manière à tourner dans le sens montant M déplaçant les pistes 9, 10, 13, 14 de la droite vers la gauche relativement aux doigts 6, 7, 15, 16. Ce déplacement amène tout d'abord la chicane 9a de la piste 9 à déplacer axialement le doigt 7 de la fourchette F1 de la voie de rang N+1 à la voie de rang neutre N, ensuite la chicane 13a de la piste 13 dévie axialement le doigt 15 de la fourchette F3 de la voie de rang N à la voie de rang N-1, puis la chicane 10a de la piste 10 dévie le doigt 6 de la fourchette F2 de la voie de rang N+1 à la voie de rang neutre N et la chicane 14a dévie axialement le doigt 16 de la fourchette F4 de la voie de rang neutre N de la piste 14 dans la voie de rang N-1 de cette même piste, pour amener au final les doigts 6, 7, 15, 16 des fourchettes F1, F2, F3, F4 à leur position d'engagement du troisième rapport de marche avant représentée à droite de la figure 8.

Ainsi, pour engager le troisième rapport de marche avant, les quatre fourchettes sont actionnées dans l'ordre suivant : F1, F3, F2 et F4.

Lorsque le troisième rapport de marche avant est engagé à la position des doigts 6, 7, 15, 16 représentée à droite de la figure 8, et que l'on souhaite engager le deuxième rapport de marche avant en tournant le barillet 8 dans le sens descendant D, les pistes 9, 10, 13, 14 de ce barillet sont déplacées de gauche à droite de la figure 8 par rapport aux doigts associés des fourchettes. Ainsi, la chicane 13b de la piste 13 dévie axialement le doigt 15 de la fourchette F3 de la voie de rang N-1 à la voie de rang N, ensuite la chicane 9b de la piste 9 dévie axialement le doigt 7 de la fourchette F1 de la voie de rang N dans la voie de rang N+1, puis la chicane 14b de la piste 14 dévie axialement le doigt 16 de la fourchette F4 de la voie de rang N-1 dans la voie de rang N et la chicane 10b de la piste 10 dévie le doigt 6 de la fourchette F2 de la voie de rang N dans la voie de rang N+1 pour, au final, amener les doigts 6, 7, 15, 16 de fourchettes correspondantes à leur position d'engagement du deuxième rapport de marche avant représentée à gauche de la figure 8.

Ainsi, les quatre fourchettes sont actionnées dans le sens de rotation descendant D du barillet 8 dans l'ordre suivant : F3, F1, F4 et F2.

Dans ces conditions, l'ordre d'actionnement des quatre fourchettes dans le sens de rotation descendant D du barillet 8 est différent de l'ordre d'actionnement inverse à celui des fourchettes dans le sens de rotation montant M de ce barillet.

Cet ordre d'actionnement des fourchettes F1 à F4 diffère ainsi de celui obtenu par un barillet classique du fait que les pistes d'un tel barillet sont telles que l'ordre d'actionnement des fourchettes dans le sens de rotation montant du barillet détermine l'ordre d'actionnement de ces fourchettes dans le sens de rotation descendant de ce barillet. Ainsi, si la configuration des pistes d'un barillet classique provoque le déplacement de quatre fourchettes pour un changement de rapport suivant l'ordre F1, F2, F3 et F4 dans le sens de rotation montant du barillet, alors ces pistes imposent un ordre d'actionnement dans l'ordre inverse F4, F3, F2 et F1 dans le sens de rotation descendant de ce barillet.

Comme expliqué précédemment, les pistes du barillet de l'invention sont telles que les fourchettes sont actionnées dans un ordre différent à celui inverse d'actionnement des fourchettes obtenu par un barillet classique dans le sens descendant du barillet.

Bien entendu, l'invention s'applique à n'importe quel nombre de fourchettes pouvant être déplacées pour assurer un changement de rapport.

Dans le cas de l'utilisation de fourchettes comme représenté en figure 1, les chicanes des pistes 9, 10 provoquent le déplacement de la fourchette 1 puis de la fourchette 2 dans le sens de rotation montant du barillet 8 autour de son axe A1, A2 et le déplacement de la fourchette 1 et de la fourchette 2 dans le sens de rotation descendant de ce barillet.

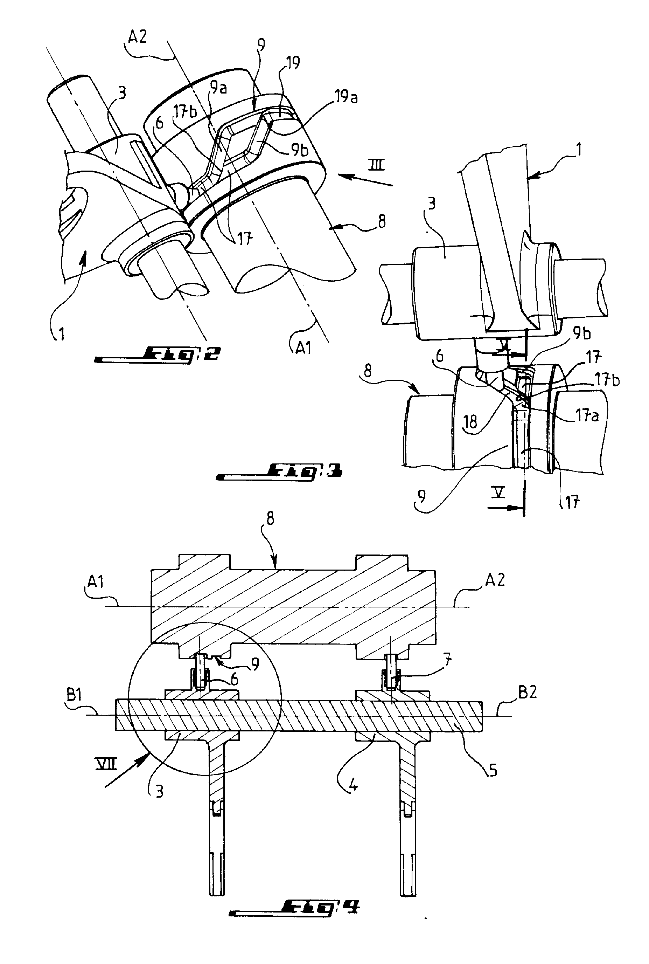

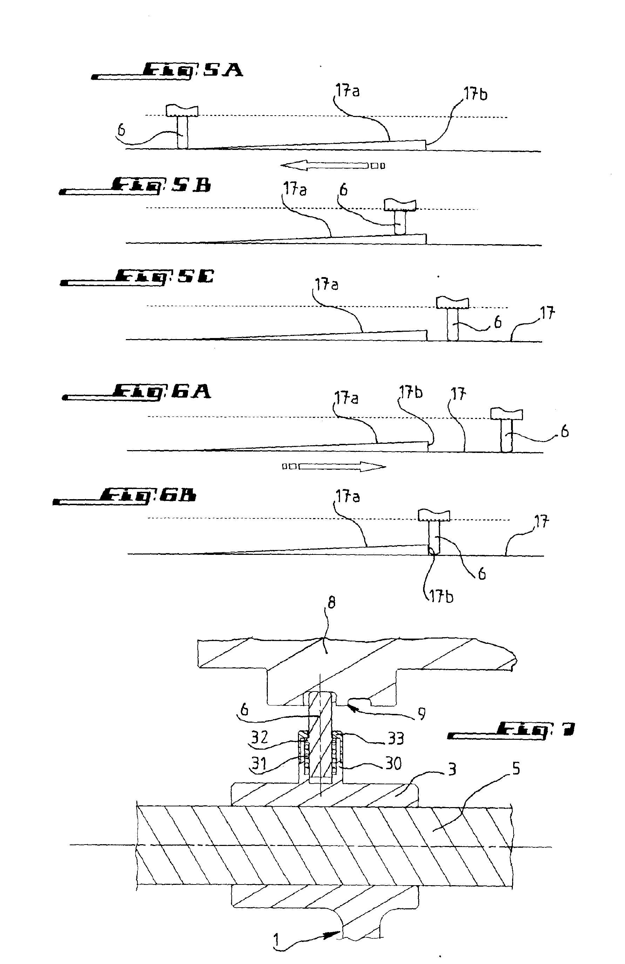

Les figures 2 et 3 en liaison avec les figures 5A, 5B, 5C, 6A, 6B représentent un mode de réalisation d'un profil d'une piste de guidage du barillet 8 permettant d'écarter axialement le doigt correspondant dans un sens déterminé de rotation du barillet et de ramener ce doigt dans sa voie d'origine dans le sens de rotation inverse de ce barillet.

La description du profil sera faite en liaison avec la piste 9 du barillet 8, étant bien entendu que cette description s'appliquera également aux autres pistes de ce barillet.

La piste 9 comprend ainsi une première voie ou chemin de guidage arqué 17 de direction perpendiculaire à l'axe longitudinal A1, A2 du barillet 8 suivie d'une voie intermédiaire formant la chicane 9a s'étendant obliquement relativement à l'axe A1, A2 et qui est prolongée par une deuxième voie 19 parallèle à la première voie 17.

La deuxième voie de guidage 19 est prolongée dans le sens de la voie 17 par une voie intermédiaire formant la chicane 9b s'étendant obliquement à l'axe A1, A2 et parallèle à la voie de chicane 9a. La voie de chicane 9b est elle-même prolongée par la première voie 17.

La partie de voie 17 située juste dans le prolongement de la partie de voie de chicane 9b a son fond 17a en pente douce ascendante vers l'entrée de la partie de chicane 9a en considérant la rotation du barillet 8 dans le sens trigonométrique par rapport à la figure 2 de manière à constituer une marche ou épaulement 17b surplombant le fond de la partie de voie 17 en amont de la voie de chicane 9a et permettant de dévier le doigt de fourchette 6 de la voie 17 dans la voie de chicane 9a.

Les figures 5A à 5C montrent le déplacement relatif entre le doigt 6 et le fond 17a de la partie de voie 17 en prolongement de la voie de chicane 9b lorsque le barillet 8 tourne dans le sens des aiguilles d'une montre par rapport à la figure 2 et symbolisé par la flèche de la figure 5A.

Ainsi, le fond 17a impose au doigt 6 un déplacement radial de doigt dans le corps 3 de la fourchette 1 à l'encontre d'une force de rappel élastique, comme on le verra ultérieurement, et ce doigt peut passer élastiquement par-dessus l'épaulement 17b pour retomber dans la partie de voie 17 située en aval de la chicane 9a en considérant le sens de rotation des aiguilles d'une montre du barillet 8.

Les figures 6A et 6B représentent une rotation du barillet 8 dans le sens trigonométrique symbolisé par la flèche de la figure 6A démontre que le doigt 6 est dévié axialement, par l'épaulement 17b, de la voie 17 dans la voie de chicane 9a.

La partie de voie 19 en prolongement de la voie de chicane 9a a également son fond en pente douce ascendante en considérant le sens trigonométrique de rotation du barillet 8 en figure 2 de manière à définir un épaulement 19a situé à l'embouchure entre l'autre partie de voie 19 et la voie de chicane 9b de manière à dévier le doigt 6 dans la voie de chicane 9b lorsque le barillet 8 est tourné dans le sens des aiguilles d'une montre. Le doigt 6 est ainsi déplacé radialement et élastiquement relativement au corps 3 de la fourchette 1 lorsqu'il est déplacé sur le fond incliné de la partie de voie 19 et saute par-dessus l'épaulement 19a pour retomber dans la partie de voie aval 19.

La figure 7 représente de façon détaillée le montage de chaque doigt, dans le cas présent le doigt 6, dans le corps de fourchette associé.

Ainsi, le corps 3 de la fourchette 1 comprend un fourreau radial 30 dans lequel est logée une partie du doigt 6. Un organe de compression 31 assure le rappel des doigts au fond de la piste correspondante. Avantageusement, cet organe de compression est un ressort hélicoïdal de compression 31 qui est disposé dans un perçage du fourreau 32 de plus grand diamètre que celui de réception du doigt 6 et qui est monté concentriquement autour de ce doigt. Le ressort 31 est monté précontraint entre le fond de son perçage et une collerette 32 du doigt 6 de manière à repousser élastiquement et radialement le doigt 6 en sens opposé au corps 3. La collerette 32 est maintenue en appui par le ressort 31 sur la face interne d'un capuchon 33 d'obturation du fourreau 30 et l'extrémité du doigt 6 opposée à son extrémité en appui au fond de la piste correspondante 9 est séparée du fond de son perçage d'une distance déterminée pour permettre au doigt 6 de suivre la pente inclinée de chaque voie de piste en prolongement de sa chicane correspondante du barillet 8 à l'encontre de la force de rappel du ressort 31.

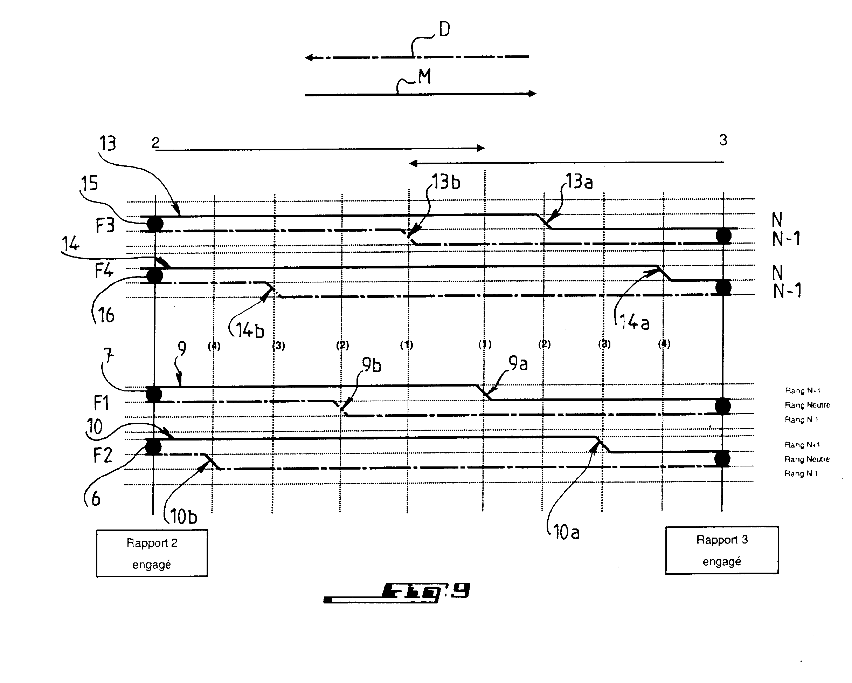

La figure 9 représente une vue développée des pistes, dans le cas présent au nombre de quatre, du barillet 8 suivant une variante de réalisation de l'invention où les chicanes de déviation axiale de chaque doigt de fourchette sont constituées par des rampes espacées angulairement sur la périphérie du barillet 8 et comprenant les rampes 9a, 10a, 13a et 14a pour assurer le déplacement axial des doigts de fourchettes 6, 7, 15, 16 suivant un ordre déterminé dans le sens de rotation montant M du barillet 8 de changement d'un rapport et les rampes 9b, 10b, 13b et 14b des pistes correspondantes pour assurer le déplacement axial des doigts 6, 7, 15, 16 dans le sens descendant D du barillet 8 suivant un ordre déterminé différent de l'ordre inverse de déplacement de ces doigts dans le sens de rotation montant de ce barillet.

Ces différentes rampes sont agencées suivant des positions décalées angulairement autour de l'axe de rotation du barillet 8 les unes par rapport aux autres à la périphérie de ce barillet de manière à déplacer les doigt 6, 7, 15, 16 selon les mêmes séquences qu'en figure 8, c'est-à-dire que dans le sens montant de rotation du barillet 8, les fourchettes F1 à F4 sont déplacées par ces rampes pour provoquer le passage du troisième rapport de marche avant suivant l'ordre F1, F3, F2, F4, et dans le sens de rotation descendant de ce barillet, les fourchettes F1 à F4 sont déplacées axialement pour provoquer le passage du deuxième rapport de marche avant lors du changement inverse du rapport suivant l'ordre F3, F1, F4 et F2.

Cependant, cette variante de réalisation des pistes de guidage 9, 10, 13, 14 du barillet de la figure 9 est moins intéressante que la variante de réalisation des pistes 9, 10, 13, 14 de la figure 8. En effet, la variante de réalisation de la figure 8 conduit à un barillet 8 de diamètre plus important et, par conséquent, plus encombrant. Une autre variante consisterait à utiliser des cames escamotables selon le sens de rotation du barillet 8, par exemple au moyen d'un organe de rappel du type ressort hélicoïdal, mais une telle architecture présente un risque de grippage des différents éléments.

Bien entendu, les chicanes des pistes de guidage du barillet 8 permettant de déplacer les fourchettes pour assurer un autre changement de rapport que celui précédemment décrit seront disposées angulairement les unes par rapport aux autres sur la périphérie du barillet suivant une configuration différente de celle représentée en figure 8, mais le principe sera le même, à savoir que les fourchettes seront déplacées dans le sens montant de rotation du barillet suivant une séquence déterminée différente de la séquence de déplacement de ces fourchettes dans le sens descendant de rotation de ce barillet, cette séquence dans le sens descendant du changement de rapport inverse étant elle-même différente de la séquence de déplacement de fourchettes inverse à celui du changement de rapport dans le sens montant.

L'invention ci-dessus décrite présente les avantages suivants :
- une modularité dans l'ordre d'actionnement des fourchettes liées aux pistes du barillet,
- une sûreté de fonctionnement du système de transmission du fait que les doigts de commande sont maintenus en permanence dans leurs pistes respectives par les ressorts de rappel,
- elle évite la montée ou descente séquentielle des rapports,
- du fait que le sens de rotation du barillet détermine un ordre d'engagement différent pour répondre au problème posé, à savoir l'utilisation de plusieurs fourchettes pendant un même changement de rapport, l'encombrement du barillet est très réduit notamment par rapport à la solution à barillet développé de la figure 9. En effet, comme expliqué précédemment, afin d'assurer la modularité de la séquence d'engagement des rapports, les rampes de guidage de la commande de la figure 9 doivent être très espacées les unes des autres avec pour inconvénient d'augmenter le diamètre du barillet et, par conséquent, son encombrement,
- le barillet de commande de l'invention peut être commandé par un seul actionneur classique, ce qui diminue les coûts par rapport à la solution connue de dédier un actionneur par fourchette de commande. Dans l'invention, il suffit donc de piloter un seul actionneur, la dépendance d'au moins deux fourchettes étant déterminée par la configuration des pistes de guidage des doigts de commande.

En outre, le barillet de commande peut comprendre un capteur (par exemple du type contacteur) dans les chicanes de sorte à informer de la position de la commande de vitesses (c'est-à-dire du rapport engagé) à tout instant ; ladite information pouvant être transmise à un organe de commande ou au conducteur du véhicule automobile. L'organe de commande en question pourrait utiliser cette information pour par exemple verrouiller ou autoriser l'engagement de la marche arrière dans une boîte de vitesses robotisée.

## Revendications

1. Grille de commande (8) de vitesses pour véhicule, tel qu'un véhicule automobile, comprenant au moins deux pistes de guidage (9, 10, 13, 14) dans lesquelles sont logés respectivement deux doigts de commande (6, 7, 15, 16) solidaires respectivement de deux fourchettes (F1, F2, F3, F4) et qui présentent des chicanes permettant de dévier axialement chaque doigt de façon à déclencher le crabotage d'un rapport suivant le rapport courant en montée ou en descente des rapports selon le sens de déplacement imparti à la grille (8), **caractérisée en ce que** chaque piste de guidage (9, 10, 13, 14) comprend au moins une chicane (9a, 10a, 13a, 14a) permettant de dévier axialement le doigt associé (6, 7, 15, 16) d'une fourchette dans le sens montant de déplacement de la grille (8) et au moins une chicane (9b, 10b, 13b, 14b) permettant de dévier axialement le doigt associé (6, 7, 15, 16) de la fourchette dans le sens descendant de déplacement de la grille (8) et **en ce que** les chicanes (9a, 10a, 13a, 14a ; 9b, 10b, 13b, 14b) des pistes sont agencées suivant des positions décalées les unes par rapport aux autres relativement au sens de déplacement de la grille (8) de manière à actionner les fourchettes (F1, F2, F3, F4) pour assurer d'une part un changement de rapport dans un sens montant ou descendant de déplacement de la grille (8) suivant un ordre d'actionnement déterminé des fourchettes et d'autre part un changement inverse du rapport dans le sens de déplacement opposé de la grille (8) suivant un ordre d'actionnement déterminé des fourchettes (F1, F2, F3, F4) différent de l'ordre d'actionnement inverse à celui se produisant lors du changement de rapport dans l'autre sens montant ou descendant de déplacement de la grille.

2. Grille de commande selon la revendication 1, **caractérisée en ce qu'**elle comprend quatre pistes de guidage (9, 10, 13, 14) de réception de quatre doigts de commande (6, 7, 15, 16) respectivement de quatre fourchettes indépendantes (F1, F2, F3, F4) pouvant être actionnées pour un changement de rapport dans le sens montant ou descendant de déplacement de la grille (8) suivant un ordre différent de l'ordre d'actionnement des fourchettes lors du changement inverse du rapport dans le sens de déplacement opposé de la grille (8).

3. Grille de commande selon la revendication 1 ou 2, **caractérisée en ce que** chaque doigt (6, 7, 15, 16) d'une fourchette (F1, F2, F3, F4) est maintenu radialement et élastiquement au fond de la piste correspondante (9, 10, 13, 14) dont l'une des chicanes (9a, 10a, 13a, 14a) dévie axialement le doigt (6, 7, 15, 16) de la fourchette d'une première voie (17) de la piste de guidage à une seconde voie parallèle de guidage (19) de cette piste dans le sens montant ou descendant de déplacement de la grille (8) et l'autre chicane opposée (9a, 10a, 13a, 14a) dévie axialement le doigt (6, 7, 15, 16) de la fourchette (F1,F2,F3,F4) de la seconde voie (19) à la première voie (17) de la piste de guidage dans le sens opposé de déplacement de la grille (8).

4. Grille de commande selon la revendication 3, **caractérisée en ce que** la voie (17, 19) d'une piste de guidage prolongeant une chicane et débouchant à l'entrée d'un doigt (6, 7, 15, 16) de l'autre chicane en considérant le sens montant ou descendant de déplacement de la grille (8) a son fond surplombant l'entrée de cette autre chicane pour constituer un épaulement (17a, 19a) permettant de dévier axialement le doigt (6, 7, 15, 16).

5. Grille selon la revendication 3 ou 4,
**caractérisée en ce que** les fourchettes (F1, F2, F3, F4) sont déviées axialement dans le même sens par les pistes (9, 10, 13, 14) de la grille (8) lorsque cette dernière est entraînée en déplacement dans le sens montant ou dans le sens descendant d'un changement de rapport.

6. Grille de commande selon la revendication 3 ou 4, **caractérisée en ce que** deux fourchettes (F1, F2) sont déviées axialement dans deux sens opposés par les pistes de la grille (8) lorsque cette dernière est entraînée en déplacement dans le sens montant ou dans le sens descendant d'un changement de rapport.

7. Grille de commande selon l'une des revendications 3 à 6, **caractérisée en ce que** chaque doigt (6, 7, 15, 16) d'une fourchette est en partie logé dans le corps (3, 4) de la fourchette et est rappelé au fond de la piste correspondante (9, 10, 13, 14) par un organe de compression (31) monté entre ledit doigt (6, 7, 15, 16) et ledit corps (3, 4).

8. Grille de commande selon la revendication 7, **caractérisée en ce que** l'organe de compression (31) est un ressort hélicoïdal de compression concentrique au doigt (6, 7, 15, 16) et précontraint entre ledit doigt et le corps (3, 4) de la fourchette.

9. Grille de commande selon l'une quelconque des revendications 1 à 8, **caractérisée en ce qu'**elle est formée d'un barillet cylindrique de commande, mobile en rotation autour d'un axe (A1, A2), comprenant au moins deux pistes de guidage circulaires (9, 10, 13, 14), et **en ce que** les chicanes (9a, 10a, 13a, 14a ; 9b, 10b, 13b, 14b) des pistes sont agencées suivant des positions décalées angulairement autour de l'axe de rotation (A1, A2) du barillet (8) les unes par rapport aux autres à la périphérie dudit barillet (8).

10. Grille de commande selon l'une quelconque des revendications 1 à 8, **caractérisée en ce qu'**elle est formée d'une grille plane mobile en translation selon une direction perpendiculaire à l'axe (B1, B2) de déplacement axial des fourchettes (F1, F2, F3, F4).

11. Boîte de vitesses pour véhicule comprenant une grille de commande selon l'une quelconque des revendications précédentes, **caractérisée en ce qu'**elle comprend un actionneur de commande du déplacement de la grille (8) et piloté soit par un dispositif purement mécanique soit par une électronique de commande, en réponse à l'actionnement par le conducteur du véhicule d'un levier de changement des rapports de la boîte de vitesses.
